# EUROPEAN PATENT APPLICATION

(11) **EP 3 266 302 A1**
(43) Date of publication of application: **10.01.2018**
(21) Application number: 17179465.4
(22) Date of filing: 04.07.2017
(51) Int. Cl.: A01K 5/01

(54) **HEIGHT ADAPTABLE MULTIPURPOSE BOWL FOR ANIMALS FEEDING**

(30) Priority: 05.07.2016 IT 201600069644
(71) Applicant: Bama S.p.A., 55011 Altopascio (LU) (IT)
(72) Inventor: BAIOCCHI, Renzo, 55015 Montecarlo (LU) (IT)
(74) Representative: Scorza, Federica

(57) **Abstract**

Height adaptable multipurpose bowl (1) for animals feeding comprising: at least one lower module (2) comprising an upper concave surface (2a) having an upper edge (2aa) and an outer lateral surface (4) comprising at least a first seat (4a) and at least a second seat (4b); and at least one upper module (3) coupled to the lower module (2) comprising an upper concave surface (3a) having an upper edge (3aa) and a lower edge (5) defining a recessed portion (5a) and a prominent portion (5b).

The first seat (4a) is provided with a horizontal protrusion (6a) configured to engage the prominent portion (5b) in a configuration of maximum height of the bowl (1). The second seat (4b) is provided with a horizontal protrusion (6b) configured to engage the prominent portion (5b), the horizontal protrusion (6a) being engaged with the recessed portion (5a), in a minimum height configuration of the bowl (1).

## Description

The present invention relates to height adaptable multipurpose bowl for animals feeding.

In particular, the present invention is related to a height adaptable multipurpose bowl for animals feeding, of the type adaptable in height depending on the animal's stature.

As it is known, different types of bowls for animals or pet feeding exist.

For example, the patent application US20150059652 describes a bowl formed by a main container supported by a structure placed in contact with the ground. A second container is formed between the outer surface of the main container and the support structure. Both containers are equipped with a removable cover that solves the problem of carrying the bowl containing food or water for the pet, avoiding the spillage.

However, the known bowls for animals are not able to vary their height in such a way as to improve the animal's posture in the phase of access to the compartment of the food or water by different size animals.

Scope of the present invention is to provide a height adaptable multipurpose bowl for animals feeding which may be easily positioned at least at two different heights, so as to be adaptable to animals of different sizes, thus having characteristics that overcome the limitations that still affect current animals feeding bowls with reference to the prior art.

According to the present invention, a height adaptable multipurpose bowl for animals feeding is provided, as defined in claim 1.

For a better understanding of the present invention a preferred embodiment is now described, purely by way of non-limiting example, with reference to the accompanying drawings, in which:
- Figure 1 shows a schematic three-dimensional view of component parts of a height adaptable multipurpose bowl for animals feeding, according to the invention;
- Figure 2 shows a schematic three-dimensional view of the height adaptable multipurpose bowl for animals feeding in a minimum height configuration, according to the invention;

- Figure 3 shows a schematic three-dimensional view of the height adaptable multipurpose bowl for animals feeding in a maximum height configuration, according to the invention;
- Figure 4 shows a schematic section view of the height adaptable multipurpose bowl for animals feeding, according to the invention.

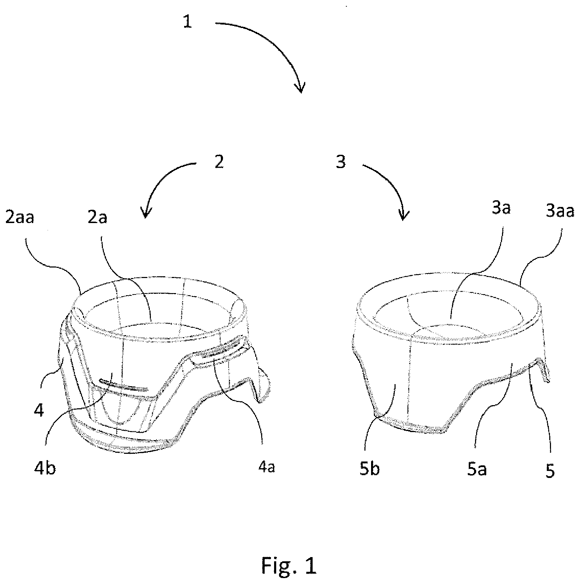

With reference to these figures and, in particular, to Figure 1, a height adaptable multipurpose bowl for animals feeding is shown, according to the invention.

More in details, the height adaptable multipurpose bowl for animals feeding 1 comprises a lower module 2 and an upper module 3 able to be coupled together.

More precisely, the lower module 2 and the upper module 3 each have a concave surface destined to the containment of food or water for the feeding of a pet. In Figure 1, the lower module 2 and the upper module 3 are shown in uncoupled configuration which enables the animal to access the contents of both the lower module 2 and the upper module 3.

In particular, the lower module 2 has an upper concave surface 2a delimited by an upper edge 2aa, an outer lateral surface 4 on which at least a first seat 4a and at least a second seat 4b are formed.

The upper module 3 has an upper concave surface 3a, an upper edge 3aa, a lower edge 5 defining a recessed portion 5a and a prominent portion 5b of the upper module 3.

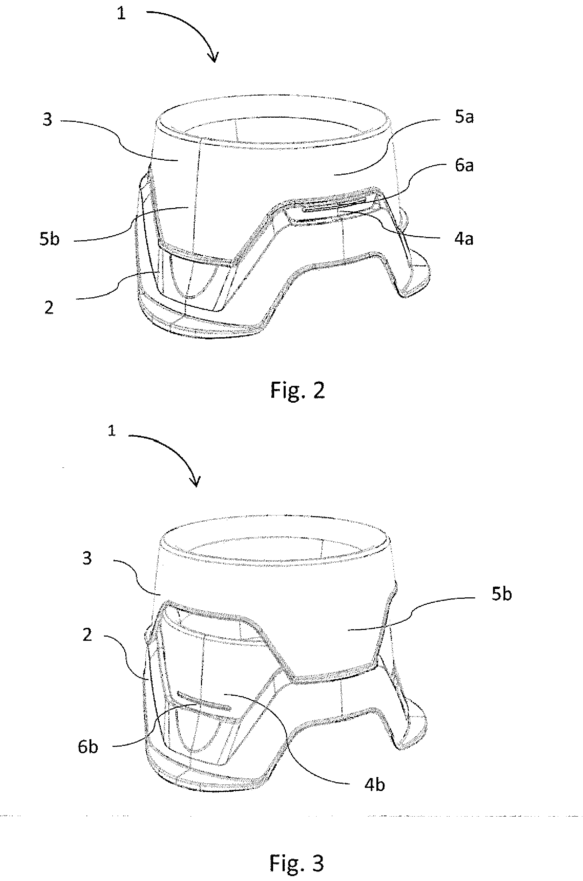

As shown in figure 2, the upper module 3 and the lower module 2 are stackable and can be positioned in a closed configuration, corresponding to the minimum distance between them, or to a minimum height configuration of the bowl 1 with respect to the ground. In particular, the upper module 3 can be overlapped on the lower module 2 by positioning the recessed portion 5a of the upper module 3 in correspondence of the first seat 4a of the lower module 2. Furthermore, in this closed configuration, the prominent portion 5b of the upper module 3 is positioned in correspondence with the second seat 4b of the lower module 2. In the minimum height configuration, the upper module 3 is configured to cover the lower module 2.

Advantageously according to the invention, the first seat 4a of the lower module 2 and the recessed portion 5a of the upper module 3 have shape and dimensions such as to guarantee the mutual coupling.

According to an aspect of the invention, the second seat 4b comprises a horizontal protrusion 6b configured to engage the prominent portion 5b in the closed configuration, i.e. of minimum height with respect to a support surface.

Advantageously, according to the invention, the closed configuration, i.e. of minimum distance between the modules 2 and 3, shown in Figure 2, is stable and the modules 2 and 3 are separable only by applying a tensile stress.

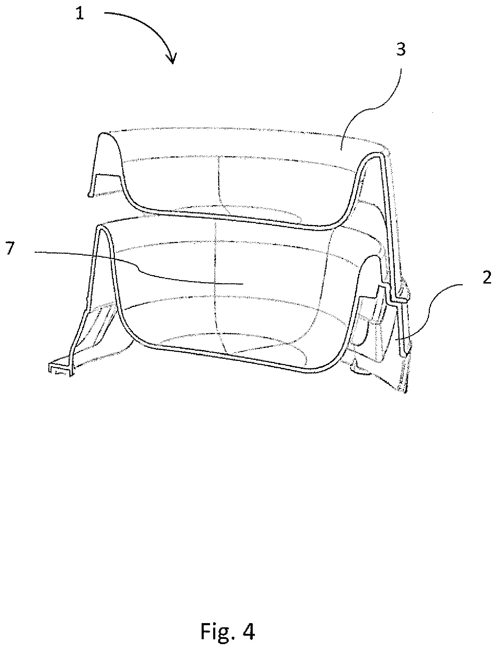

According to an aspect of the invention, when the bowl 1 is in the closed configuration, forms a compartment 7, shown in Figure 4, comprised between the concave surface 2a of the lower module 2 and the lower surface of the upper module 3, this compartment 7 being isolated from the outside and being able to be intended for the transport of food, or other substance, for feeding a pet.

Advantageously according to the invention, the closed configuration shown in Figure 2 allows to transport food, or other substances, contained in the compartment 7 in a convenient and secure manner, avoiding spills or leaks of the food, or substance.

Advantageously according to the invention, in the closed configuration, the upper module 3 acts as a lid for the lower module 2.

Advantageously, the upper module 3 is shaped so as to overlap the lower module 2 and close it perfectly.

As shown in Figure 3, the bowl 1 can be arranged according to a second configuration, in which the upper module 3 is overlapped on the lower module 2 in such a way that the prominent portion 5b of the upper module 3 is positioned in correspondence of the first seat 4a of the lower module 2.

This second configuration corresponds to the maximum distance between the lower module 2 and the upper module 3, and to the maximum height of the bowl 1 with respect to the support surface.

The first seat 4a is a horizontal recess positioned at a height higher than that of the second seat 4b, relative to the ground. Consequently, the overlap between the prominent portion 5b, in which the distance between the lower edge 5 and the upper edge 3aa is maximum, and the first seat 4a can facilitate the raise of the upper module 3 with respect to the ground.

According to an aspect of the invention, the first seat 4a comprises a horizontal protrusion 6a configured to engage the prominent portion 5b when positioned in the configuration of maximum distance, i.e. of maximum height relative to a support surface.

Advantageously, when placed in the second configuration, or configuration of maximum height of the bowl 1, the bowl 1 is raised with respect to the supporting base, thus being more convenient way for use by a pet of medium-large size.

Therefore, the height adaptable multipurpose bowl for animals feeding according to the invention allows to adjust the height of the bowl according to the animal's stature.

In addition, the height adaptable multipurpose bowl for animals feeding according to the invention allows to use a single bowl configurations and for different uses.

Another advantage of the height adaptable multipurpose bowl for animals feeding according to the invention is to be easily assembled and disassembled.

A further advantage of the height adaptable multipurpose bowl for animals feeding according to the invention consists in being compact.

In addition, the height adaptable multipurpose bowl for animals feeding according to the invention allows to carry food or other substance for the animal, in a compartment isolated from the environment.

Finally, the height adaptable multipurpose bowl for animals feeding according to the invention is of low cost.

Finally, it is clear that the height adaptable multipurpose bowl for animals feeding here described and illustrated may be subject to modifications and variations without thereby departing from the scope of the present invention, as defined in the appended claims.

## Claims

1. Height adaptable multipurpose bowl (1) for animals feeding comprising:
- at least one lower module (2) comprising an upper concave surface (2a) having an upper edge (2aa) and an outer lateral surface (4) comprising at least a first seat (4a) and at least a second seat (4b); and
- at least one upper module (3) coupled to the lower module (2) comprising an upper concave surface (3a) having an upper edge (3aa) and a lower edge (5) defining a recessed portion (5a) and a prominent portion (5b);
**Characterized in that** the first seat (4a) is provided with a horizontal protrusion (6a) configured to engage the prominent portion (5b) in a configuration of maximum height of the bowl (1) and the second seat (4b) is provided with a horizontal protrusion (6b) configured to engage the prominent portion (5b), the horizontal protrusion (6a) being engaged with the recessed portion (5a), in a minimum height configuration of the bowl (1).

2. Height adaptable multipurpose bowl (1) for animals feeding according to claim 1, **characterized in that** the first seat (4a) is a horizontal recess at a distance higher than the distance of the second seat height (4b) from the floor.

3. Height adaptable multipurpose bowl (1) for animals feeding according to claim 1, **characterized in that** at least an isolated compartment (7) comprised between the concave surface (2a) of the lower module (2) and the lower surface of the upper module (3) is formed in the minimum height configuration.

4. Height adaptable multipurpose bowl (1) for animals feeding according to claim 1, **characterized in that** in the minimum height configuration, the upper module (3) is configured to cover the lower module (2).
